Europäisches Patentamt

European Patent Office

Office européen des brevets

(19)

(11) **EP 1 266 302 B1**

(12) **FASCICULE DE BREVET EUROPEEN**

(45) Date de publication et mention
de la délivrance du brevet:
**04.10.2006 Bulletin 2006/40**

(21) Numéro de dépôt: **01919523.9**

(22) Date de dépôt: **16.03.2001**

(51) Int Cl.:
***G06F 17/15*** *(2006.01)*

(86) Numéro de dépôt international:
**PCT/FR2001/000801**

(87) Numéro de publication internationale:
**WO 2001/071548 (27.09.2001 Gazette 2001/39)**

(54) **PROCEDE D'ESTIMATION D'UNE MATRICE DE CORRELATION DE SIGNAUX INTERFERENTS REçUS PAR UN RESEAU DE CAPTEUR**

VERFAHREN ZUR SCHÄTZUNG EINER KORRELATIONSMATRIX VON DURCH EIN SENSORNETZ EMPFANGENEN, INTERFERIERENDEN SIGNALEN

METHOD FOR ESTIMATING A CORRELATION MATRIX OF INTERFERING SIGNALS RECEIVED THROUGH A SENSOR ARRAY

(84) Etats contractants désignés:
**AT BE CH CY DE DK ES FI FR GB GR IE IT LI LU MC NL PT SE TR**

(30) Priorité: **20.03.2000 FR 0003597**

(43) Date de publication de la demande:
**18.12.2002 Bulletin 2002/51**

(73) Titulaire: **Thales**
**75008 Paris (FR)**

(72) Inventeurs:
• **CHEVALIER, Pascal**
**94117 Arcueil Cedex (FR)**
• **PIPON, François**
**94117 Arcueil Cedex (FR)**

(74) Mandataire: **Dudouit, Isabelle**
**Marks & Clerk France**
**31-33 Avenue Aristide Briand**
**94117 Arcueil Cedex (FR)**

(56) Documents cités:
**US-A- 5 262 785**          **US-A- 5 262 789**
**US-A- 5 359 333**          **US-A- 6 008 759**

• **BELOUCHRANI A ET AL: "Array processing in correlated noise fields based on joint eigen-decomposition of spatial-temporal correlation matrices" CONFERENCE RECORD OF THIRTIETH ASILOMAR CONFERENCE ON SIGNALS, SYSTEMS AND COMPUTERS (CAT. NO.96CB36004), CONFERENCE RECORD OF THE THIRTIETH ASILOMAR CONFERENCE ON SIGNALS, SYSTEMS AND COMPUTERS, PACIFIC GROVE, CA, USA, 3-6 NOV. 1996, pages 385-388 vol.1, XP002172104 1997, Los Alamitos, CA, USA, IEEE Comput. Soc. Press, USA ISBN: 0-8186-7646-9**
• **STOICA P ET AL: "Detection tests for array processing in unknown correlated noise fields" IEEE TRANSACTIONS ON SIGNAL PROCESSING, SEPT. 1997, IEEE, USA, vol. 45, no. 9, pages 2351-2362, XP002172105 ISSN: 1053-587X**

**Description**

La présente invention concerne un procédé d'estimation d'une matrice de corrélation de signaux à caractéristiques inconnues, reçus par un réseau comportant un nombre N déterminé de capteurs, les capteurs recevant des signaux composés notamment de signaux ayant des caractéristiques connues ainsi que de signaux de caractéristiques inconnues telles que du bruit et/ou des brouilleurs.

L'invention trouve son application dans différents domaines, notamment les suivants :

- la goniométrie de différentes sources arrivant sur le réseau, c'est-à-dire la détermination de leurs directions d'arrivée,
- le filtrage spatial afin de protéger une ou plusieurs liaisons de sources interférentes,
- tout autre dispositif dans lequel il est souhaitable d'estimer la matrice de corrélation de signaux utiles et celle des signaux interférents.

Dans de nombreuses applications notamment dans le domaine des télécommunications, l'utilisation des méthodes de traitement d'antenne se révèle particulièrement intéressante.

Parmi les signaux arrivant sur le réseau de capteurs qui constituent l'antenne, certains sont de caractéristiques connues, les signaux utiles en télécommunications par exemple, d'autres présentent des caractéristiques inconnues, tels les interférences. Un grand nombre de ces méthodes sont basées sur l'estimation de la matrice de corrélation des signaux reçus par les capteurs

Dans la suite de la description différents paramètres et notations sont utilisés, notamment les suivantes :

- $N$, le nombre de capteurs d'un réseau,
- $\boldsymbol{x}(n)$, le vecteur observation reçu par le réseau de $N$ capteurs après numérisation, ou signaux capteurs,
- $\boldsymbol{x}_u(n)$, la composante du vecteur observation correspondant aux signaux dits signaux utiles, dont les caractéristiques sont connues du traitement,
- $M$, le nombre de signaux utiles,
- $\boldsymbol{x}_b(n)$, la composante du vecteur observation correspondant aux signaux dits signaux interférents (bruit et/ou brouilleurs), dont les caractéristiques sont inconnues du traitement,
- $P$, le nombre de signaux interférents,
- $Rx = E(\boldsymbol{x}(n)\,\boldsymbol{x}(n)^\dagger)$, la matrice de corrélation théorique des signaux capteurs,
- $Rs$, la matrice de corrélation théorique du vecteur signal $\boldsymbol{x}_u(n)$,
- $Rb$, la matrice de corrélation théorique du vecteur signal $\boldsymbol{x}_b(n)$.
- '$\dagger$', représente l'opération de transposition -conjugaison.

En supposant que les signaux utiles sont décorrélés des signaux interférents, la relation (1) liant les différentes matrices de corrélation théoriques définies ci-dessus, peut s'exprimer de la manière suivante :

$$Rx = E(\boldsymbol{x}(n)\,\boldsymbol{x}(n)^\dagger) = E((\boldsymbol{x}_u(n)+\boldsymbol{x}_b(n))\,(\boldsymbol{x}_u(n)+\boldsymbol{x}_b(n))^\dagger)$$

$$Rx = E(\boldsymbol{x}_u(n)\,\boldsymbol{x}_u(n)^\dagger) + E(\boldsymbol{x}_b(n)\,\boldsymbol{x}_b(n)^\dagger) + 2\,\mathrm{Re}\{E(\boldsymbol{x}_u(n)\,\boldsymbol{x}_b(n)^\dagger)\}\quad.$$

$$Rx = Rs + Rb \quad (1)$$

En disposant de la connaissance de la matrice de corrélation des signaux utiles Rs et de la matrice $Rx$, la matrice $Rb$ peut s'obtenir simplement à partir de la relation (1) :

$$Rb = Rx - Rs. \quad (1')$$

Appliquée aux estimées de ces matrices de corrélation, la relation (1') ne donne pas de bons résultats, comme il est démontré par exemple dans le livre « Introduction to adaptive arrays » ayant pour auteurs R.A.Monzingo, W.Miller, publié aux éditions John Wiley and Sons, New York, 1980. En effet, l'estimée de la matrice de corrélation *Rx* comporte également des termes relatifs à la corrélation entre les signaux utiles et les signaux interférents $E(x_u(n)\ x_b(n)^\dagger)$, qui ne sont nuls qu'asymptotiquement.

L'objet de l'invention concerne un procédé permettant d'estimer notamment la matrice de corrélation des signaux interférents à partir de la matrice de corrélation des signaux reçus sur un réseau comportant un nombre N de capteurs et d'une estimée de la matrice de corrélation des signaux utiles.

L'invention concerne un procédé pour estimer la matrice de corrélation de signaux de caractéristiques inconnues dans un réseau comportant un nombre N de capteurs, lesdits capteurs recevant au moins les signaux Sb de caractéristiques inconnues et des signaux Su de caractéristiques connues, l'ensemble des Su et Sb formant les signaux capteurs Sx.

Il est caractérisé en ce qu'il comporte au moins les étapes suivantes :

a) déterminer la matrice $\hat{Rs}$ ou $\hat{Rs},\alpha$ de corrélation des signaux Su de caractéristiques connues,
b) estimer la matrice de corrélation $\hat{Rx}$ des signaux Sx capteurs,
c) former une matrice *A* égale à $A = \hat{Rs}^{-1/2}\ \hat{Rx}\ \hat{Rs}^{-1/2}$
d) décomposer la matrice A en éléments propres pour obtenir ses valeurs propres $\lambda_i$ et ses vecteurs propres $u_i$, avec

$$\lambda_1 \leq \lambda_2 \leq \text{........} \leq \lambda_N$$

e) construire une matrice B ayant des vecteurs propres $v_i$ sensiblement égaux aux vecteurs propres $u_i$ de la matrice A, et des valeurs propres $\gamma_i$ égales aux valeurs propres $\lambda_i$ à une constante $\beta$ près, la valeur de la constante $\beta$ étant déterminée à partir des N-P plus petites valeurs propres de la matrice A, P étant le nombre de brouilleurs ou signaux interférents, avec

$$\lambda_1 \leq \beta \leq \lambda_N$$

f) déterminer la matrice estimée $\hat{Rb}$ de corrélation des signaux interférents Sb à partir de la matrice estimée $\hat{Rs}$ et de la matrice B, telle que

$$\hat{Rb} = \hat{Rs}^{1/2}\ B\ \hat{Rs}^{1/2}.$$

Pour une matrice B de rang N-P, la valeur de la constante $\beta$ est par exemple la plus petite valeur propre des $\lambda i$ ou bien elle est déterminée à partir des N-P plus petites valeurs propres des $\lambda i$ en prenant la valeur moyenne.

Le procédé selon l'invention s'applique aussi au traitement d'antennes.

L'invention concerne aussi un dispositif pour estimer la matrice de corrélation de signaux de caractéristiques inconnues dans un réseau comportant un nombre N de capteurs, lesdits capteurs recevant au moins les signaux Sb de caractéristiques inconnues et des signaux Su de caractéristiques connues, l'ensemble des Su et Sb formant les signaux capteurs Sx. Il est caractérisé en ce qu'il comporte des moyens adaptés pour mettre en oeuvre le procédé selon l'une des caractéristiques décrites ci-dessus.

L'invention présente notamment les avantages suivants :

- dans les applications par goniométrie, elle permet de diminuer le nombre de capteurs utilisés, la goniométrie étant effectuée uniquement sur certains signaux, et d'améliorer la précision de goniométrie des sources sélectionnées,
- dans les applications OLS abréviation de l'expression "opposition des lobes secondaires" ou SLC en anglais pour (side lobe canceller), la minimisation de puissance recherchée peut être réalisée uniquement sur les signaux interférents tout en protégeant les signaux utiles,
- dans les applications FAS abréviation de l'expression (filtre adapté spatial) ou SMF (Spatial Matched Filter), le procédé selon l'invention permet d'augmenter la vitesse de convergence du traitement et la robustesse par rapport aux erreurs.

D'autres caractéristiques et avantages de l'invention apparaîtront à l'aide de la description qui suit faite, à titre illustratif et nullement limitatif, en regard des dessins annexés qui représentent :

- la figure 1 schématise les différents signaux arrivant sur un réseau comportant un nombre N de capteurs,
- la figure 2 représente un algorithme comportant les étapes du procédé selon l'invention,
- la figure 3 schématise un dispositif OLS, et
- la figure 4 représente une application du procédé selon l'invention au filtrage adapté spatial.

Le procédé selon l'invention utilise notamment les estimées de la matrice de corrélation des signaux utiles et de la matrice de corrélation des signaux capteurs pour en déduire l'estimée de la matrice de corrélation des signaux interférents.

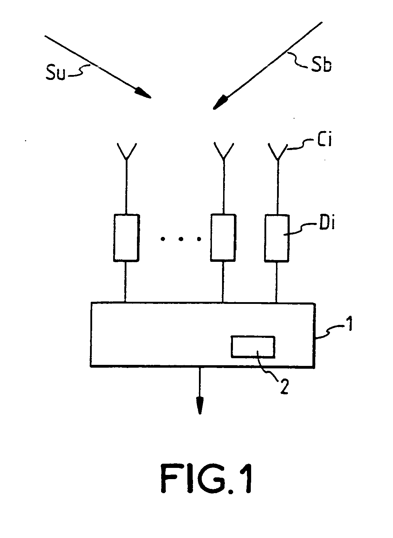

La figure 1 schématise une antenne comportant un réseau de N capteurs Ci. Les capteurs Ci recevant tous les signaux utiles, bruit, brouilleurs, sont en liaison chacun avec un récepteur, l'ensemble des N récepteurs Di constituant un récepteur multivoies connus de l'Homme du métier. Le récepteur multivoie est lui-même relié à un dispositif 1 de numérisation et de traitement des signaux en réalisant les étapes du procédé selon l'invention. Pour cela le dispositif comporte par exemple un microprocesseur 2 ou un calculateur adapté pour mettre en oeuvre les étapes.

Le procédé selon l'invention repose sur des concepts rappelés en utilisant les matrices théoriques ci-après, à partir de la relation

$$Rx = Rs + Rb \quad (1)$$

Par Rs on désigne la matrice Rs qui peut être connue ou de manière plus générale Rs,$\alpha$ la matrice Rs connue au coefficient $\alpha$ près, Rs,$\alpha = \alpha$Rs

L'idée consiste à

a) « blanchir » la matrice d'observation Rs de la façon suivante :

1 - <u>si la matrice Rs est inversible</u>, le procédé consiste à multiplier à droite et à gauche les deux termes de l'équation (1) par $(Rs,\alpha)^{-1/2}$, l'expression (2) suivante est obtenue :

$$(Rs,\alpha)^{-1/2} \, Rx(Rs,\alpha)^{-1/2} = (Rs,\alpha)^{-1/2} \, Rs \, (Rs,\alpha)^{-1/2} + (Rs,\alpha)^{-1/2} \, Rb \, (Rs,\alpha)^{-1/2}$$

$$(Rs,\alpha)^{-1/2} \, Rx \, (Rs,\alpha)^{-1/2} = \alpha^{-1} \, Id + (Rs,\alpha)^{-1/2} \, Rb \, (Rs,\alpha)^{-1/2} \quad (2)$$

ou encore A=$\alpha^{-1}$Id+B

avec Id la matrice identité

2 - <u>si la matrice Rs n'est pas inversible,</u> ce qui est le cas en particulier si le nombre *M* de signaux utiles est inférieur au nombre N de capteurs du réseau *N*. La matrice est rendue inversible en ajoutant un terme $\delta$ *Id,* avec $\delta < \sigma^2$, où $\sigma^2$ est la puissance de bruit de fond. La matrice à considérer dans la suite des étapes du procédé correspond alors à $Rs,\alpha = \alpha \, Rs + \delta \, Id.$

La matrice de corrélation *Rb* calculée par la suite comprendra la contribution intégrale des signaux interférents, et une contribution réduite du bruit de fond (de puissance $\sigma^2 - \delta$), ce qui revient à augmenter artificiellement le INR (Interference to Noise ratio) des signaux interférents dans la matrice de corrélation estimée.

Ainsi qu'il a été mentionné précédemment, l'expression (2) peut être de la forme A = $\alpha^{-1}$ Id + B

b) décomposer en éléments propres matrice A blanchie obtenue au cours de l'étape a)

$$A = Rs^{-1/2}\, Rx\, Rs^{-1/2} = \sum_{i=1}^{N} \lambda_i\, \boldsymbol{u_i}\, \boldsymbol{u_i^\dagger} \qquad (3)$$

Où: $\lambda_i$ et $\boldsymbol{u_i}$ représentent respectivement les valeurs propres et les vecteurs propres de la matrice $A$.
A la fin de l'étape b) les valeurs propres $\lambda_i$ et les vecteurs propres $\boldsymbol{u_i}$ de la matrice A sont connus, avec

$$\lambda_1 \le \lambda_2 \le \ldots\ldots \le \lambda_N$$

c) construire une matrice B à partir des valeurs propres et des vecteurs propres obtenus à l'étape b).
Dans le cas où le nombre de signaux interférents est strictement inférieur au nombre N de capteurs, et en l'absence de bruit de fond, alors la matrice $B = (Rs,\alpha)^{-1/2}\, Rb\, (Rs,\alpha)^{-1/2}$ est de rang $N\text{-}P$, (N étant le nombre de capteurs et P le nombre de signaux interférents) et d'après l'équation (2), la matrice A possède P valeurs propres supérieures à $\alpha^{-1}$ et $N\text{-}P$ valeurs propres identiques telles que : $\lambda_1 = \lambda_2 = ... = \lambda_{N\text{-}P} = \alpha^{-1}$.
Dans ces conditions, la matrice $B$ élaborée a pour éléments propres :

- des vecteurs propres vi qui sont sensiblement identiques aux vecteurs propres ui de la matrice A, et
- des valeurs propres $\gamma$i égales aux valeurs propres $\lambda_i$ - $\lambda_l$;

La matrice B s'exprime par exemple par la relation

$$B = \sum_{i=1}^{N} (\lambda_i - \lambda_1)\, \boldsymbol{u_i}\, \boldsymbol{u_i^\dagger} \qquad (4)$$

Avec $\gamma$i = $(\lambda_i - \lambda_l)$

d) connaissant B et la matrice de corrélation Rs, il est possible d'obtenir la matrice de corrélation des signaux interférents

$$Rb = Rs^{1/2}\, B\, Rs^{1/2} \qquad (5)$$

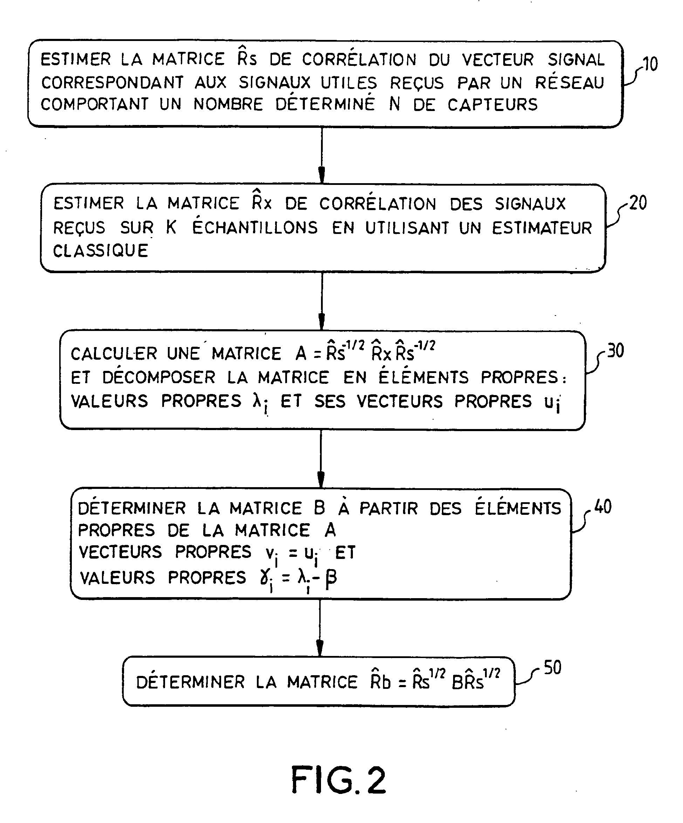

Les relations (2) à (5) précédentes, écrites à partir des matrices de corrélation théoriques, servent de base pour les étapes du procédé selon l'invention qui utilisent les estimées des matrices.
Les étapes exposées ci-dessus utilisant les matrices de corrélation théorique, sont appliquées aux estimées de matrice.
Cela implique la connaissance des estimées des matrices de corrélation des signaux utiles et des signaux capteurs pour déterminer l'estimée de la matrice des signaux interférents.
Pour cela l'information disponible sur les signaux utiles doit permettre de construire une estimation suffisamment bonne de la matrice de corrélation Rs, à une constante multiplicative près. Cette estimation peut être obtenue de plusieurs façons décrites ci-après.
Le nombre P de signaux interférents est de préférence inférieur au nombre N de capteurs constituant l'antenne de réception. Si cette dernière condition n'est pas vérifiée, un biais sera obtenu sur l'estimation de la matrice $Rb$.
Le procédé met en oeuvre plusieurs étapes mentionnées sur l'algorithme de la figure 2.

**A ) Déterminer la matrice blanchie A par les étapes suivantes**

1 ère étape - 10 - estimer la matrice de corrélation $\hat{Rs}$ à partir des informations sur les sigaux utiles.

Par exemple, si le traitement connaît les vecteurs directeurs (qui peuvent être déterminés à partir des directions d'arrivée) et les puissances des signaux utiles, la Matrice de corrélation estimée $\hat{Rs}$ s'écrit :

$$\hat{Rs} = \sum_{m=1}^{M} \pi_m \, \boldsymbol{s}_m \, \boldsymbol{s}_m^{\dagger} \qquad (6)$$

avec '$\pi'_m$ = la puissance
et $s_m$ = vecteur directeur

Si la matrice de corrélation ainsi formée n'est pas inversible, la matrice est rendue inversible comme il a été exposé précédemment par ajout d'un terme $\delta$ *Id* :

$$\hat{Rs} = \sum_{m=1}^{M} \pi_m \, \boldsymbol{s}_m \, \boldsymbol{s}_m^{\dagger} + \delta \, \textit{Id} \qquad (7)$$

selon le cas, l'expression (6) ou l'expression (7) est utilisée dans la suite du procédé

2 ème étape - 20 - estimation de la matrice de corrélation des signaux capteurs reçus sur *K* échantillons, à partir par exemple de l'estimateur classique non biaisé :

$$\hat{Rx} = \frac{1}{K} \sum_{k=1}^{K} \boldsymbol{x}(k) \, \boldsymbol{x}(k)^{\dagger} \qquad (8)$$

L'intégration de la matrice de corrélation $\hat{Rx}$ doit être effectuée sur un nombre d'échantillons *K* suffisant, afin de pouvoir négliger les termes de corrélation entre les signaux utiles et les signaux interférents.

3 ème étape - 30 - calcul de la matrice $A = \hat{Rs}^{-1/2} \, \hat{Rx} \, \hat{Rs}^{-1/2}$ et décomposition de la matrice A en éléments propres

$$A = \sum_{i=1}^{N} \lambda_i \, \boldsymbol{u}_i \, \boldsymbol{u}_i^{\dagger} \qquad (9)$$

*avec* $R_s^{-1/2}$ = inverse racine carrée de $R_s$

Le calcul et la décomposition sont décrits par exemple dans le livre ayant pour titre "Numerical Recipes in C" et pour auteurs W.H. PRESS, B.R FLANNERY, S.A. TEUKOLSY, W.T. VETTERLING, 1992 (Editeur : Cambridge University).

A l'issue de cette 3 ème étape les vecteurs propres $u_j$ et les valeurs propres $\lambda_i$ de la matrice A sont connus

**B) Déterminer une matrice B et l'estimée de la matrice des signaux interférents**

4 ème étape - 40 - formation de la matrice B à partir des éléments de A en déterminant ses éléments propres: vecteurs propres et valeurs propres

- les vecteurs propres $v_j$ sont sensiblement égaux ou égaux aux vecteurs propres $u_j$ obtenus par décomposition de la matrice A,
- les valeurs propres $\gamma_i$ sont sensiblement égales ou égales aux valeurs propres $\lambda_j$ obtenues par décomposition de la matrice A corrigées d'une valeur ou constante $\beta$ qui est choisie à partir des plus petites N-P valeurs propres de la matrice A ou égale à la plus petite valeur propre de la matrice A.

la matrice B prend alors l'expression suivante :

$$\sum_{i=1}^{N} (\lambda_i - \beta)\, u_i\, u_i^t \qquad\qquad (10)$$

Avantageusement, la valeur de la constante $\beta$ est la plus petite valeur propre des $\lambda_i$.
Selon un autre mode de réalisation, la valeur de la constante $\beta$ est déterminée en moyennant les N-P valeurs propres de la matrice A.

5 ème étape - 50 - déterminer la matrice de corrélation des vecteurs signaux interférents.

A partir de B et de la valeur estimée pour la matrice $\hat{Rs}$, le procédé permet d'obtenir la valeur estimée de la matrice de corrélation $\hat{Rb}$ correspondant aux signaux interférents.

$$\hat{Rb} = \hat{Rs}^{1/2}\, B\, \hat{Rs}^{1/2} \qquad\qquad (11)$$

La connaissance de la valeur estimée de la matrice de corrélation des signaux interférents peut être utilisée dans différents traitements de signaux dont certains exemples sont donnés ci-après à titre illustratif et nullement limitatif.
Le procédé selon s'applique dans différents types d'applications dont certaines sont données à titre illustratif et nullement limitatifs.

**Application à la goniométrie**

Plusieurs méthodes de goniométrie sont basées sur l'exploitation de la matrice de corrélation des signaux reçus sur un réseau de capteurs. Certaines de ces méthodes, dites méthodes à haute résolution telle la méthode MUSIC décrite par exemple dans la référence (1) ou la méthode ESPRIT décrite dans la référence (2) par exemple. Ces méthodes permettent de faire la goniométrie de plusieurs sources arrivant simultanément sur un réseau de capteurs.

(1) article intitulé « Multiple Emitter Location and Signal Parameter Estimation » de la revue IEEE Trans. Ant. Prop., Vol AP-34, n°3, pp 276-280, March 1986 ayant pour auteur M.R.D.Schmidt.
(2) article intitulé « Estimation of Signal Parameters via Rotational Invariance Techniques » de la revue IEEE Transaction ASSP, Vol ASSP-37, pp 984-995, July 1989 ayant pour auteurs MM.Roy, T. Kailath.
(3) brevet US-A- 5 359 333 publié le 25 octobre 1994.

Toutefois, ces méthodes possèdent certaines limitations : l'utilisation d'un réseau de $N$ capteurs permet ainsi typiquement d'effectuer la goniométrie de N/2 sources.

Lorsque le réseau reçoit des signaux utiles et des signaux interférents, il est possible de les séparer, en mettant en oeuvre les étapes du procédé décrites ci-dessus. Après avoir séparé les signaux interférents des signaux utiles, la goniométrie est par exemple effectuée selon des méthodes connues de l'Homme du métier, en mettant en oeuvre uniquement la matrice de corrélation estimée $\hat{R}b$. La goniométrie détermine les directions d'arrivée des P signaux interférents, et non pas les directions d'arrivée de M+P sources, ce qui améliore ses performances. Elle est réalisée comme si les signaux utiles étaient absents.

L'application du procédé selon l'invention nécessite un nombre de capteurs moindre que celui habituellement utilisé dans l'art antérieur.

**Application au filtrage spatial**

*OLS*

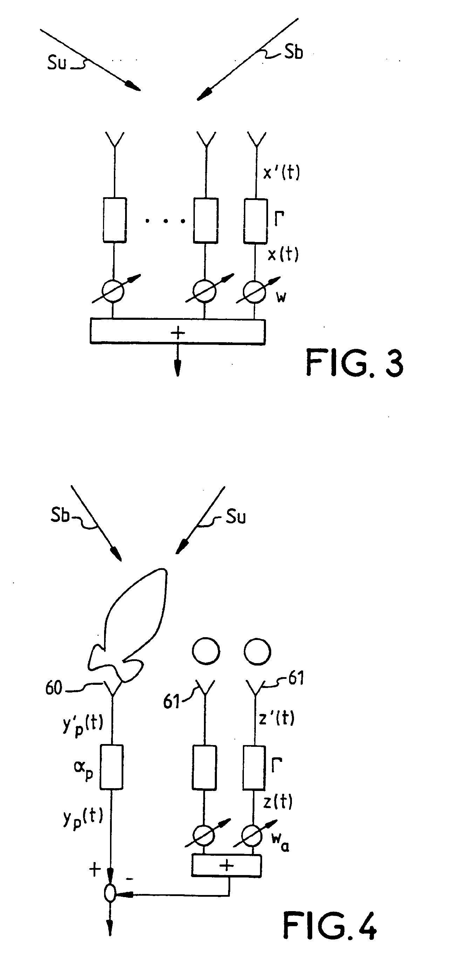

Le schéma de principe de l'OLS est rappelé sur la figure 3. L'OLS est utilisé pour protéger les signaux utiles arrivant d'une direction donnée vis-à-vis de signaux interférents.

Il est décrit par exemple dans les références (3) et (4) suivantes :

(3) article intitulé « Adaptative Arrays» de la revue IEEE Trans. Ant.Prop., Vol AP 24, N°5, pp 585-598, September 1976 ayant pour auteur S.P.Applebaum.

(4) article intitulé « Explorations in fixed and adaptive resolution at GE and SURC», de la revue IEEE Trans. Ant.Prop., Vol AP 24, N°5, pp 585-598, September 1976 ayant pour auteur P.W.Howells.

Il est basé sur l'utilisation d'un capteur principal directif 60, pointant dans la direction des signaux utiles, et de L capteurs auxiliaires 61 permettant d'éliminer l'influence des signaux interférents présents dans la voie principale. Les L capteurs auxiliaire et le capteur principal constitue le réseau de N capteurs.

Les pondérations $w_a$ de l'OLS sont calculées de manière à minimiser la puissance totale du signal de sortie $y_p(f) - w_a^\dagger z(f)$. Elles s'expriment à partir de $Rz$ la matrice de corrélation des signaux des voies auxiliaires et de $r_{zy}$, le vecteur d'inter-corrélation entre $z(f)$ et $y_p(f)$:

$$w_a = Rz^{-1} r_{zy} \qquad (12)$$

avec $Rz = E(z(f), z(f)^\dagger)$ et $r_{Zy} = E(z(t), y_p(f)^\dagger)$
où $z(f)$ est le signal de sortie des voies auxiliaires et $y_p(f)$ le signal de sortie de la voie principale.

L'OLS doit être employé avec précaution, afin d'éviter le risque d'une élimination des signaux utiles. Ce risque est d'autant plus fort que les brouilleurs sont de puissance faible par rapport aux utiles, ou que le nombre de voies auxiliaires est supérieur au nombre de brouilleurs. Un bon conditionnement de l'OLS doit être mis en oeuvre. Ainsi les voies auxiliaires doivent être aussi peu directives que possible dans la direction des signaux utiles et aussi directives que possible dans la direction des brouilleurs.

Afin d'éviter le risque d'une élimination des signaux utiles, plusieurs méthodes de robustification de l'OLS existent dans la littérature :

- Ajout d'un bruit fictif de manière à « masquer » la présence des signaux utiles,
- Contrainte de norme sur les pondérations $w_a$: $||w_a|| <$ Max, ...

Le procédé selon l'invention consiste à mettre en oeuvre l'OLS comme si les signaux utiles étaient absents, en estimant les corrélations de l'expression (12) correspondant aux signaux interférents. Le risque de leur élimination est ainsi écarté et l'algorithme optimise l'élimination des signaux interférents et non des signaux utiles.

Pour cela la matrice de corrélation $\hat{R}b$ est estimée en mettant en oeuvre les étapes du procédé selon l'invention et en posant $x(f) = [(z(f)^\dagger y_p(f)]^\dagger$, La formule (12) permet alors d'obtenir les pondérations $w_d$ en considérant que la matrice $Rz$ (respectivement le vecteur $r_{zy}$) correspond aux L premières lignes et aux $L$ premières colonnes (respectivement aux $L$ premières lignes de la dernière colonne) de la matrice estimée $\hat{R}b$.

**EP 1 266 302 B1**

**Filtre Adapté Spatial - figure 4**

Afin de protéger un signal utile dont la direction d'arrivée est connue, il est possible de mettre en oeuvre le filtre adapté spatial sur direction d'arrivée.

L'algorithme utilisé consiste à minimiser la puissance totale de sortie de l'antenne tout en maintenant un gain unité dans la direction du signal utile.

Les notations suivantes sont utilisées :

- $w$, le vecteur de pondération correspondant au filtre spatial,
- $s$, le vecteur directeur du signal utile, qui s'obtient par exemple à partir de la connaissance de la direction du signal utile, connu ou estimé par goniométrie par exemple,
- $y(f) = w^\dagger x(f)$ la sortie du filtre spatial.

Le vecteur $w$ s'écrit :

$$w = a\ \hat{Rx}^{-1}\ s,$$

où a est une constante multiplicative près.

L'obtention du vecteur w est par exemple décrit dans la référence (5) ayant pour titre "Système mixte de goniométrie à haute résolution et de réjection adaptative de brouilleurs dans la gamme HF", ayant pour auteurs F.Pipon, P.Chevalier, G.Multedo publié dans Proc.GRETSI, pp 685-688, Septembre 1991.

Le filtre spatial conduit à une maximisation du SNIR : rapport entre la puissance du signal arrivant de la direction correspondant au vecteur directeur $s$ (signal utile) et la somme de la puissance du bruit de fond et de la puissance des signaux venant des autres directions (signaux interférents).

Dans la pratique, $w$ est estimé en utilisant la matrice de corrélation estimée $\hat{Rx}$, et un vecteur $\hat{s}$ proche du véritable vecteur directeur s.

Cette technique exige que le vecteur directeur $s$ soit connu parfaitement. En effet, lorsque $\hat{s}$ ne correspond pas au vecteur directeur $s$, l'algorithme risque d'éliminer le signal utile.

Le procédé selon l'invention permet de s'affranchir de ce risque et d'améliorer les performances du filtre adapté spatial.

Le filtre spatial $w$ est calculé à partir de la matrice estimée $R$, déterminée en mettant en oeuvre le procédé selon l'invention calculé selon l'invention, et de $\hat{s}$. Le filtre spatial $w$ est alors égal à : a $\hat{Rb}^{-1}$ s.

L'utilisation de cette méthode permet également avantageusement d'améliorer la vitesse de convergence de l'algorithme de calcul de $w$..

Sans sortir du cadre de l'invention, le procédé s'applique notamment dans les domaines suivants :

- quelque soit le type de sources : bande étroite, large bande, ou trajets multiples,
- télécommunications spatiales, par exemple pour la protection d'un théâtre d'opérations vis-à-vis d'interférences,
- écoute passive, par exemple après une étape de goniométrie et une intensimétrie des émetteurs reçus,
- GE : localisation angulaire d'interférences en présence de signaux connus,
- Radar, acoustique, radiocommunications

**Revendications**

**1.** Procédé pour estimer la matrice de corrélation de signaux de caractéristiques inconnues reçus par un réseau comportant un nombre N de capteurs, afin de traiter les signaux reçus par ledit réseau, lesdits capteurs recevant au moins les signaux Sb de caractéristiques inconnues et des signaux Su de caractéristiques connues, l'ensemble des Su et Sb formant les signaux capteurs Sx **caractérisé en ce qu'**il comporte au moins les étapes suivantes :

a) déterminer la matrice $\hat{Rs}$ ou Rs,$\alpha$ de corrélation des signaux Su de caractéristiques connues,
b) estimer la matrice de corrélation $\hat{Rx}$ des signaux Sx capteurs,
c) former une matrice A égale à $A = \hat{Rs}^{-1/2}\ \hat{Rx}\ \hat{Rs}^{-1/2}$
d) décomposer la matrice A en éléments propres pour obtenir ses valeurs propres $\lambda_i$ et ses vecteurs propres $u_i$, avec

$$\lambda_1 \leq \lambda_2 \leq \ldots\ldots \leq \lambda_N$$

e) construire une matrice B ayant des vecteurs propres $v_i$ égaux aux vecteurs propres $u_i$ de la matrice A, et des valeurs propres $\gamma_i$ égales aux valeurs propres $\lambda_i$ à une constante près, la valeur de la constante $\beta$ étant déterminée à partir des N-P plus petites valeurs propres de la matrice A, P étant le nombre de brouilleurs ou signaux interférents, avec

$$\lambda_1 \leq \beta \leq \lambda_{N-P}$$

f) déterminer la matrice estimée $\hat{Rb}$ de corrélation des signaux interférents Sb à partir de la matrice estimée $\hat{Rs}$ et de la matrice B, telle que $\hat{Rb} = \hat{Rs}^{1/2} B \hat{Rs}^{1/2}$.

2. Procédé selon la revendication 1 **caractérisé en ce que** $\beta$ correspond à la plus petite valeur propre des $\lambda_i$.

3. Procédé selon la revendication 1 **caractérisé en ce que** la constante $\beta$ est déterminée à partir des N-P plus petites valeurs propres des $\lambda_i$ en prenant la valeur moyenne.

4. Procédé selon la revendication 1 **caractérisé en ce que** la matrice $\hat{Rs}$ déterminée à l'étape a) est déterminée à partir d'informations de puissance et de directions d'arrivée des signaux utiles selon l'expression :

$$\hat{Rs} = \sum_{m=1}^{M} \pi_m \, s_m \, s_m^\dagger \qquad\qquad (6)$$

avec $\pi_m$ = la puissance
et $s_m$ = vecteur directeur

5. Procédé selon l'une des revendications 1 à 4 **caractérisé en ce que** la matrice Rs ou Rs,$\alpha$, est rendue inversible en ajoutant un terme $\delta$ $Id$, avec $\delta < \sigma^2$, où $\sigma^2$ est la puissance de bruit de fond.

6. Procédé selon l'une des revendications 1 à 5 **caractérisé en ce qu'**il comporte une étape de goniométrie effectuée sur les signaux interférents Sb en utilisant la matrice estimée $\hat{Rb}$ obtenue au cours de l'étape f).

7. Procédé selon l'une des revendications 1 à 5 **caractérisé en ce qu'**il comporte une étape de détermination des pondérations $w_o$ dans un dispositif de type OLS où les N capteurs comportent L capteurs auxiliaires (61) et un capteur principal (60), en déterminant une matrice Rz correspondant aux L premières lignes et aux L premières colonnes de la matrice estimée $\hat{Rb}$ et un vecteur $R_{zy}$ correspondant aux L premières lignes de la dernière colonne de la matrice estimée $\hat{Rb}$ et en utilisant l'expression $w_o = Rz^{-1} r_{zy}$ avec $Rz = E(\mathbf{z}(t), \mathbf{z}(\dagger)^\dagger)$ et $\mathbf{r}_{zy} = E(\mathbf{z}(t), y_p(\dagger)^\dagger)$.

8. Procédé selon l'une des revendications 1 à 5 **caractérisé en ce qu'**il comporte une étape de détermination d'un filtre spatial w à partir de la matrice estimée $\hat{Rb}$ avec $w = a \hat{Rb}^{-1}s$.

9. Application du procédé selon l'une des revendications 1 à 8 au traitement d'antennes.

10. Dispositif pour estimer la matrice de corrélation de signaux de caractéristiques inconnues reçus par un réseau comportant un nombre N de capteurs, afin de traiter les signaux reçus par ledit réseau, lesdits capteurs recevant au moins les signaux Sb de caractéristiques inconnues et des signaux Su de caractéristiques connues, l'ensemble des Su et Sb formant les signaux capteurs Sx **caractérisé en ce qu'**il comporte des moyens adaptés pour mettre en oeuvre le procédé selon l'une des revendications 1 à 5.

**Claims**

1. Process for estimating the correlation matrix of signals of unknown characteristics, which are received by an array comprising a number N of sensors, so as to process the signals received by said array, said sensors receiving at least the signals Sb of unknown characteristics and signals Su of known characteristics, the Su and Sb together forming the sensor signals Sx, **characterized in that** it comprises at least the following steps:

   a) determining the correlation matrix $\hat{Rs}$ or Rs, $\alpha$ of the signals Su of known characteristics,
   b) estimating the correlation matrix $\hat{Rx}$ of the sensor signals Sx,
   c) forming a matrix A equal to $\boldsymbol{A} = \hat{Rs}^{-1/2} \hat{Rx} \hat{Rs}^{-1/2}$
   d) decomposing a matrix A into eigenelements so as to obtain its eigenvalues $\lambda_i$ and its eigenvectors $u_i$, with

$$\lambda_1 \leq \lambda_2 \leq ......... \leq \lambda_N$$

   e) constructing a matrix B having eigenvectors $v_i$ equal to the eigenvectors $u_i$ of the matrix A, and eigenvalues $\gamma_i$ equal to the eigenvalues $\lambda_i$ to within a constant, the value of the constant $\beta$ being determined on the basis of the N-P smallest eigenvalues of the matrix A, P being the number of jammers or interfering signals, with

$$\lambda_1 \leq \beta \leq \lambda_{N-P}$$

   f) determining the estimated correlation matrix $\hat{Rb}$ of the interfering signals Sb on the basis of the estimated matrix $\hat{Rs}$ and of the matrix B, such that $\hat{Rb} = \hat{Rs}^{1/2} B \hat{Rs}^{1/2}$.

2. Process according to Claim 1, **characterized in that** $\beta$ corresponds to the smallest of the eigenvalues $\lambda_i$.

3. Process according to Claim 1, **characterized in that** the constant $\beta$ is determined on the basis of the N-P smallest of the eigenvalues $\lambda_i$ by taking the average value.

4. Process according to Claim 1, **characterized in that** the matrix $\hat{Rs}$ determined in step a) is determined on the basis of information regarding the power and directions of arrival of the useful signals according to the expression:

$$\hat{Rs} = \sum_{m=1}^{M} \pi_m s_m s_m^{\dagger} \qquad (6)$$

   with $\pi_m$ = the power
   and $S_m$ = direction vector

5. Process according to one of Claims 1 to 4, **characterized in that** the matrix Rs or Rs,$\alpha$, is rendered invertible by adding a term $\delta$ *Id,* with $\delta < \sigma^2$, where $\sigma^2$ is the background noise power.

6. Process according to one of Claims 1 to 5, **characterized in that** it comprises a step of goniometry performed on the interfering signals Sb by using the estimated matrix $\hat{Rb}$ obtained in the course of step f).

7. Process according to one of Claims 1 to 5, **characterized in that** it comprises a step of determining the weightings $w_a$ in a device of SLC type where the N sensors comprise L auxiliary sensors (61) and a main sensor (60), by determining a matrix Rz corresponding to the first L rows and the first L columns of the estimated matrix $\hat{Rb}$ and a vector $R_{zy}$ corresponding to the first L rows of the last column of the estimated matrix $\hat{Rb}$ and by using the expression $w_a = Rz^{-1} r_{zy}$ with $Rz = E(z(\dagger), z(\dagger)^{\dagger})$ and $r_{zy} = E(z(\dagger), y_p(\dagger)^{\dagger})$.

8. Process according to one of Claims 1 to 5, **characterized in that** it comprises a step of determining a spatial filter w on the basis of the estimated matrix $\hat{R}b$ with w = a $\hat{R}b^{-1}$s.

9. Application of the process according to one of Claims 1 to 8 to antenna processing.

10. Device for estimating the correlation matrix of signals of unknown characteristics, which are received by an array comprising a number N of sensors, so as to process the signals received by said array, said sensors receiving at least the signals Sb of unknown characteristics and signals Su of known characteristics, the Su and Sb together forming the sensor signals Sx, **characterized in that** it comprises means suitable for implementing the process according to one of Claims 1 to 5.

**Patentansprüche**

1. Verfahren zum Schätzen der Korrelationsmatrix von Signalen mit unbekannten Eigenschaften, die von einem Netz mit einer Anzahl N von Sensoren empfangen werden, um die von dem Netz empfangenen Signale zu verarbeiten, wobei die Sensoren mindestens Signale Sb mit unbekannten Eigenschaften und Signale Su mit bekannten Eigenschaften empfangen, wobei die Su und Sb zusammen die Sensorsignale Sx bilden, **dadurch gekennzeichnet, daß** es mindestens die folgenden Schritte umfaßt:

a) Bestimmen der Korrelationsmatrix $\hat{R}s$ oder Rs,$\alpha$ der Signale Su mit bekannten Eigenschaften,
b) Schätzen der Korrelationsmatrix $\hat{R}x$ der Sensorsignale Sx,
c) Bilden einer Matrix A gleich $A = \hat{R}s^{-1/2} \hat{R}x \hat{R}s^{-1/2}$
d) Zerlegen einer Matrix A in Eigenelemente, um ihre Eigenwerte $\lambda_i$ und ihre Eigenvektoren $u_i$ zu erhalten, mit

$$\lambda_1 \leq \lambda_2 \leq \ldots\ldots\ldots \leq \lambda_N$$

e) Konstruieren einer Matrix B mit Eigenvektoren $v_i$ gleich den Eigenvektoren $u_i$ der Matrix A und Eigenwerten $\gamma_i$ bis auf eine Konstante gleich den Eigenwerten $\lambda_i$, wobei der Wert der Konstanten $\beta$ auf der Basis der N-P kleinsten Eigenwerte der Matrix A bestimmt wird, wobei P die Anzahl der Störer oder interferierenden Signale ist, mit

$$\lambda_1 \leq \beta \leq \lambda_{N-P}$$

f) Bestimmen der geschätzten Korrelationsmatrix $\hat{R}b$ der interferierenden Signale Sb auf der Basis der geschätzten Matrix $\hat{R}s$ und der Matrix B dergestalt, daß $\hat{R}b = \hat{R}s^{1/2}B\hat{R}s^{1/2}$ ist.

2. Verfahren nach Anspruch 1, **dadurch gekennzeichnet, daß** $\beta$ dem kleinsten der Eigenwerte $\lambda_i$ entspricht.

3. Verfahren nach Anspruch 1, **dadurch gekennzeichnet, daß** die Konstante $\beta$ auf der Basis der N-P kleinsten der Eigenwerte $\lambda_i$ durch Nehmen des Mittelwerts bestimmt wird.

4. Verfahren nach Anspruch 1, **dadurch gekennzeichnet, daß** die im Schritt a) bestimmte Matrix $\hat{R}s$ auf der Basis von Informationen bezüglich der Leistung und der Ankunftsrichtungen der nützlichen Signale gemäß dem folgenden Ausdruck bestimmt wird:

$$\hat{R}s = \sum_{m=1}^{M} \pi_m s_m s_m{}^t$$

mit $\pi_m$ = die Leistung
und $s_m$ = Richtungsvektor.

5. Verfahren nach einem der Ansprüche 1 bis 4, **dadurch gekennzeichnet, daß** die Matrix Rs oder Rs,$\alpha$ durch Hinzufügen eines Glieds $\delta$ *Id,* mit $\delta < \sigma^2$, wobei $\sigma^2$ die Leistung des Grundrauschens ist, invertierbar gemacht wird.

6. Verfahren nach einem der Ansprüche 1 bis 5, **dadurch gekennzeichnet, daß** es einen Schritt der Goniometrie umfaßt, der an den interferierenden Signalen Sb unter Verwendung der im Verlauf von Schritt f) erhaltenen geschätzten Matrix $\hat{R}b$ ausgeführt wird.

7. Verfahren nach einem der Ansprüche 1 bis 5, **dadurch gekennzeichnet, daß** es einen Schritt des Bestimmens der Gewichtungen W$_a$ in einer Einrichtung des Typs OLS, wobei die N Sensoren L Hilfssensoren (61) und einen Hauptsensor (60) umfassen, durch Bestimmen einer den ersten L Zeilen und den ersten L Spalten der geschätzten Matrix $\hat{R}b$ entsprechenden Matrix Rz und eines den ersten L Zeilen der letzten Spalte der geschätzten Matrix $\hat{R}b$ entsprechenden Vektors R$_{zy}$ und durch Verwenden des Ausdrucks w$_a$ = Rz$^{-1}$r$_{zy}$ mit Rz = E(z(t), z(t)$^t$) und r$_{zy}$ = E (z(t), y$_p$(t)$^\dagger$) umfaßt.

8. Verfahren nach einem der Ansprüche 1 bis 5, **dadurch gekennzeichnet, daß** es einen Schritt des Bestimmens eines räumlichen Filters w auf der Basis der geschätzten Matrix $\hat{R}b$ mit w = a $\hat{R}b^{-1}$s umfaßt.

9. Anwendung des Verfahrens nach einem der Ansprüche 1 bis 8 auf die Antennenverarbeitung.

10. Einrichtung zum Schätzen der Korrelationsmatrix von Signalen mit unbekannten Eigenschaften, die von einem Netz mit einer Anzahl N von Sensoren empfangen werden, um die von dem Netz empfangenen Signale zu verarbeiten, wobei die Sensoren mindestens Signale Sb mit unbekannten Eigenschaften und Signale Su mit bekannten Eigenschaften empfangen, wobei die Su und Sb zusammen die Sensorsignale Sx bilden, **dadurch gekennzeichnet, daß** sie zum Implementieren des Verfahrens nach einem der Ansprüche 1 bis 5 geeignete Mittel umfaßt.

Su

Sb

Ci

Di

1

2

# FIG.1

ESTIMER LA MATRICE $\hat{R}s$ DE CORRÉLATION DU VECTEUR SIGNAL CORRESPONDANT AUX SIGNAUX UTILES REÇUS PAR UN RÉSEAU COMPORTANT UN NOMBRE DÉTERMINÉ N DE CAPTEURS — 10

ESTIMER LA MATRICE $\hat{R}x$ DE CORRÉLATION DES SIGNAUX REÇUS SUR K ÉCHANTILLONS EN UTILISANT UN ESTIMATEUR CLASSIQUE — 20

CALCULER UNE MATRICE $A = \hat{R}s^{-1/2}\,\hat{R}x\,\hat{R}s^{-1/2}$ ET DÉCOMPOSER LA MATRICE EN ÉLÉMENTS PROPRES : VALEURS PROPRES $\lambda_i$ ET SES VECTEURS PROPRES $u_i$ — 30

DÉTERMINER LA MATRICE B À PARTIR DES ÉLÉMENTS PROPRES DE LA MATRICE A
VECTEURS PROPRES $v_i = u_i$ ET
VALEURS PROPRES $\gamma_i = \lambda_i - \beta$ — 40

DÉTERMINER LA MATRICE $\hat{R}b = \hat{R}s^{1/2}\,B\hat{R}s^{1/2}$ — 50

# FIG.2

$Su$ $Sb$

$x'(t)$

$\Gamma$

$x(t)$

$w$

$+$

# FIG. 3

$Sb$ $Su$

$60$

$61$ $61$

$y'_p(t)$ $z'(t)$

$\alpha_p$ $\Gamma$

$y_p(t)$ $z(t)$

$w_a$

$+$

$+$ $-$

# FIG.4